# EUROPEAN PATENT SPECIFICATION

(11) **EP 1 843 321 B1**
(45) Date of publication and mention of the grant of the patent: **28.11.2012**
(21) Application number: 07006155.1
(22) Date of filing: 26.03.2007
(51) Int. Cl.: G09G 3/36, G09G 3/34

(54) **Liquid crystal display apparatus and method of driving the same**
Flüssigkristallanzeigevorrichtung und Ansteuerverfahren dafür
Appareil d'affichage à cristaux liquides et son procédé de commande

(30) Priority: 04.04.2006 KR 20060030427
(43) Date of publication of application: 10.10.2007
(73) Proprietor: Samsung Display Co., Ltd., Yongin-City, Gyeonggi-Do (KR)
(72) Inventor: Shin, Seong-Sik, Seongnam-si Gyeonggi-do (KR); Lee, Jong-Seo, Taean-eub Hwaseong-si Gyeonggi-do (KR); Lee, Joo-Young, Seoul (KR); Jun, Tae-Jong, Youngin-si Gyeonggi-do (KR); Han, Jung-Suk, Gyeonggi-do (KR)
(74) Representative: Dr. Weitzel & Partner

(56) References cited:
- WO-A-03/107083
- US-A1- 2001 038 371

## Description

This application relies for priority upon Korean Patent Application No. 2006-30427 field on April 4, 2006.

### Field of the Invention

The present invention relates to a liquid crystal display apparatus and, more particularly, to a liquid crystal display apparatus for displaying an image by using a frame divided into a plurality of fields.

### Description of the Related Art

In a conventional liquid crystal display, a color image is displayed by selectively transmitting white light through three different color filters that are adjacent to each other at each pixel, thereby reducing the actual image resolution to 1/3 of the number of actual pixels as well as reducing the amount of light-transmittance and a color purity.

In order to alleviate these effects, a color filter-less (CFL) LCD apparatus driven by a time-division sequential driving method has been developed. A conventional color filter LCD apparatus displays a color image using a red color filter, a green color filter and a blue color filter. However, The CFL LCD apparatus driven by the time-division sequential driving method divides a frame into a plurality of fields sequentially generating lights having a color different from each other to display a desired color.

However, the light generated in each of the fields overlaps the light generated in an adjacent field causing an undesired mixing of the colors.
Documents WO 03107083 A1 and US 2001 038371 A1 disclose a backlight control of LCD devices.

### SUMMARY OF THE INVENTION

The present invention provides a liquid crystal display (LCD) apparatus and a method capable of reducing color mixing to improve color purity according to independent claims 1 and 6. The present invention displays a color image by dividing each frame sequentially into a plurality of different color fields. The LCD apparatus includes n f light-generating units sequentially generating the lights in the fields, n being a natural number more than 1. An initial light-generating time of an nth light-generating unit being delayed by a predetermined time interval from the time of an (n-1)th light-generating unit so that each of the fields includes a first period, in which one of the lights is generated, and a second period, in which at least two of the lights is generated. The light-generating units generate a peak light having a peak intensity in the first period.

The light-generating units may be arranged in the direction of the gate lines and generate the lights for a time period substantially the same as each other. The predetermined time interval may be T1 /n, T1 being the time period of each of the fields. The backlight unit may further include a light-generating controller to control the light-generating units. Each of the fields may be divided into n sub fields corresponding to the number of the light-generating units, so that the first light-generating unit stops generating the light corresponding to the end of an nth sub field.

Illustratively, the number of the light-generating units may be 8, and a first light-generating unit may generate the light in a fifth subfield, a sixth sub field, a seventh sub field and an eighth sub field of each of the fields. The first light-generating unit may generate the peak light in the eighth sub field. A second light-generating unit, a third light-generating unit and a fourth light-generating unit may generate the peak light in the eighth sub field. A fifth light-generating unit, a sixth light-generating unit, a seventh light-generating unit and an eighth light-generating unit may generate the peak light in a sub field corresponding to the initial light-generating time.

In another aspect of the present invention, an LCD apparatus time-divides a frame into a plurality of fields, in which lights having a color different from each other, are generated, to display an image. The LCD apparatus includes an LCD panel and a backlight unit. The LCD panel includes a plurality of gate lines and a plurality of data lines crossing the gate lines. The backlight unit includes n of light-generating units sequentially generating the lights in the fields, n being a natural number more than 1. An initial light-generating time of an nth light-generating unit being delayed by a predetermined time gap in comparison with an initial light-generating time of an (n-1)th light-generating unit. For example each of the light-generating units generates at least one of the lights for a time period shorter than the remaining lights.

The light-generating units may be arranged in an arranging direction of the gate lines and generate the lights for a time period substantially same as each other. The time gap may be T1/n, T1 being a time period of each of the fields. The backlight unit may further include a light-generating controller to control the light-generating units. Each of the fields may be divided into n of sub fields corresponding to the number of the light-generating units, and a first light-generating unit closes generating the light corresponding to an end of an nth sub field.

For example, the number of the light-generating units is 8, and at least one of the lights may be generated for T1×(3/8), and the remained lights may be generated for T1×(4/8).

In still another aspect of the present invention, a method of driving an LCD apparatus is provided. In the method, an LCD apparatus time-divides a frame into a plurality of fields, in which lights having a color different from each other, are generated, to display an image. The lights are sequentially generated by n of light-generating units arranged in an arranging direction of a plurality of gate lines, n being a natural number more than 1. An initial light-generating time of an nth light-generating unit being delayed by T1 /n, T1 being a time period of each of the fields, in comparison with an initial light-generating time of an (n-1)th light-generating unit so that each of the fields comprises a first period, in which one of the lights is generated, and a second period, in which at least two of the lights is generated. A time period, for which each of the lights is generated, is substantially same as each other. A peak light having a peak intensity is generated in the first period.

In further example, a method of driving an LCD apparatus is provided. In the method, an LCD apparatus time-divides a frame into a plurality of fields, in which lights having a color different from each other, are generated, to display an image. The lights are generated by n of light-generating units arranged in an arranging direction of a plurality of gate lines, n being a natural number more than 1. An initial light-generating time of an nth light-generating unit being delayed by T1 /n, T1 being a time period of each of the fields, in comparison with an initial light-generating time of an (n-1)th light-generating unit. At least one of the lights is generated for a time period shorter than remained lights.

According to the above, an intensity of light generated by a light-generating unit or a time period, for which the light is generated, is controlled. Thus, a color mixing may be minimized, and a color purity may be improved.

### BRIEF DESCRIPTION OF THE DRAWINGS

The above and other advantages of the present invention will become readily apparent by reference to the following detailed description when considered in conjunction with the accompanying drawings wherein:
FIG. 1 is a block diagram illustrating a liquid crystal display (LCD) apparatus according to an exemplary embodiment of the present invention;
FIG. 2 is a perspective view illustrating light-generating units illustrated in FIG. 1;
FIG. 3 is a schematic view explaining the timing of an LCD apparatus according to an exemplary embodiment of the present invention;
FIG. 4 is a timing diagram illustrating a method of driving the light-generating units according to the timing of FIG. 3;
FIG. 5 is a timing diagram illustrating a method of driving the light-generating units according to another example;
FIG. 6 is a schematic diagram explaining the timing of an LCD apparatus according to another exemplary embodiment of the present invention.

### DESCRIPTION OF THE EMBODIMENTS

Embodiments of the invention are described herein with reference to cross-section illustrations that are schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing.

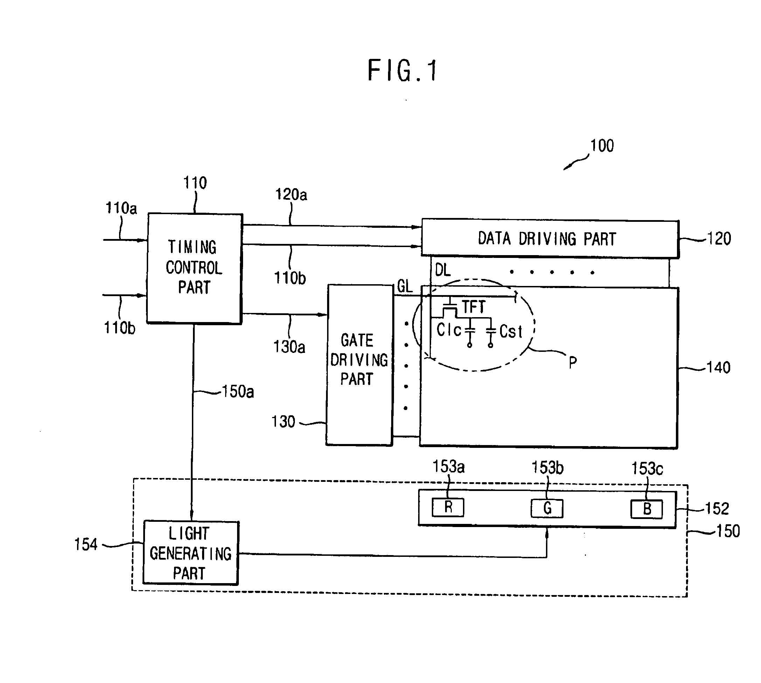

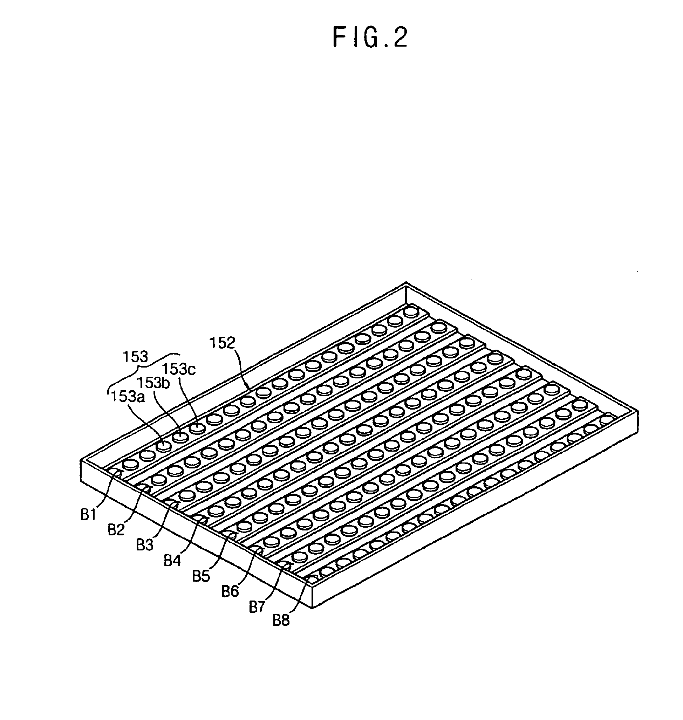

Referring to FIGS. 1 and 2, an LCD apparatus 100 includes a timing control 110, a data driver 120, a gate driver 130, an LCD panel 140 and a backlight unit 1 50. When the LCD apparatus 100 is operated to display an image, a frame is time-divided into a plurality of fields sequentially displaying a color different from each other according to a time division driving method.

A timing control signal 110a and a data signal 110b is applied to the timing control 110 from an external device, such as a graphic controller, etc. The timing control 110 outputs control signals to drive the LCD apparatus 100 in response to the timing control signal 110a. For example, the timing control 110 may output a data control signal 1 20a to control the data driver 120, a gate control signal 130a to control the gate driver 130 and a backlight control signal 150a to control the backlight unit 150.

The data driver 120 converts the data signal 110a to an analog data voltage in response to the data control signal 120a applied to the data driver 120 from the timing control 110, and provides the LCD panel 140 with the converted data signal 110a.

The gate driver 130 generates a gate signal in response to the gate control signal 130a applied to the gate driver 130 from the timing control 110, and provides the LCD panel 140 with the gate signal.

The LCD panel 140 includes a first substrate (not shown) and a second substrate (not shown) that is coupled to the first substrate and receives a liquid crystal layer (not shown). The first substrate includes a plurality of gate lines GL and a plurality of data lines DL. A plurality of pixels P is defined by the gate lines GL and the data lines DL.

A switching device TFT, a liquid crystal capacitor Clc and a storage capacitor Cst are formed in each of the pixels P. The switching device TFT is electrically connected to the gate line GL and the data line DL. The liquid crystal capacitor Clc is electrically connected to the switching device TFT.

In this embodiment, the second substrate does not have a color filter.

The backlight unit 150 includes a plurality of light-generating units 152 to generate light and a light-generating control 1 54 to control the light-generating units 152.

The light-generating units 152 are arranged in an arranging direction of the gate lines GL of the LCD panel 140. For example, eight light-generating units 152 may be arranged in the arranging direction of the gate lines GL. Alternatively, the number of the light-generating units 152 may be varied. The light-generating units 152 are sequentially driven in the arranging direction of the gate lines GL by a predetermined time gap.

The light-generating units 152 are controlled by the light-generating control 1 54 to generate lights having a color different from each other corresponding to each of the fields. The light-generating unit 152 includes a plurality of light-generating devices 153. For example, the light-generating unit 152 may include a plurality of light-emitting diodes (LED). The light-generating device 1 53 includes a plurality of first light-generating devices 153a to generate a first light, a plurality of second light-generating devices 153b to generate a second light and a plurality of third light-generating devices 153c to generate a third light. For example, the first light may be red, and the second light may be green, and the third light may be blue. The first, second and third light-generating devices 153a, 153b and 153c are sequentially driven according to the time division driving method to sequentially generate the first, second and third lights.

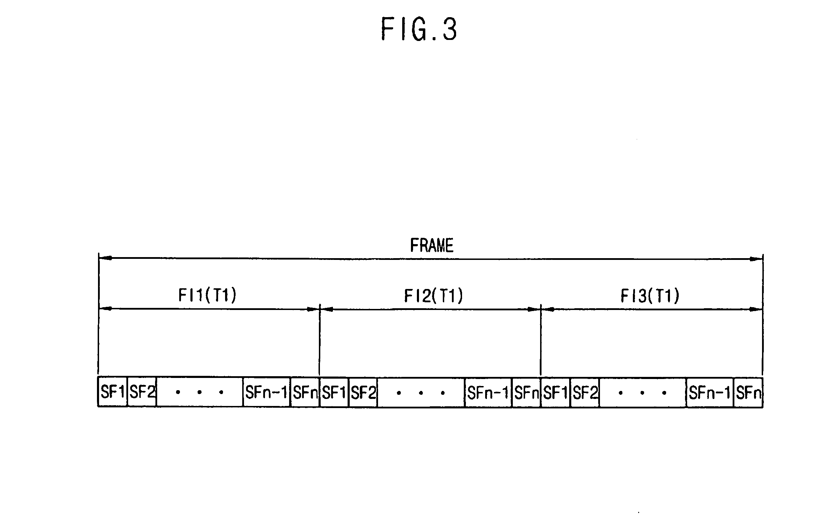

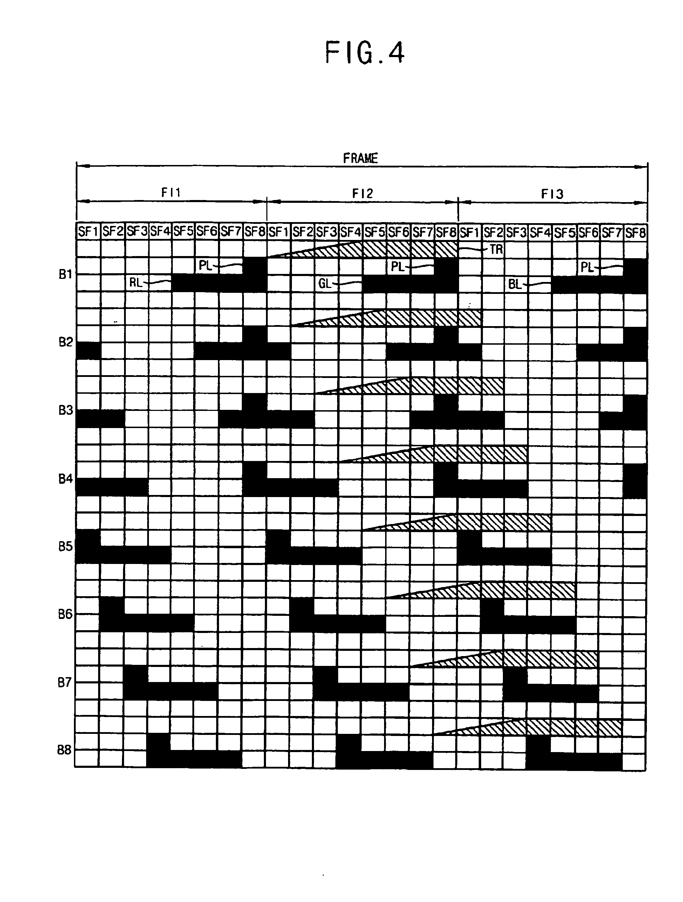

FIG. 3 is a schematic view explaining the driver timing of an LCD apparatus according to an exemplary embodiment of the present invention. FIG. 4 is a timing diagram illustrating a method of driving the light-generating units according to the driver timing of FIG. 3.

Referring to FIGS. 1 to 4, when the LCD apparatus is operated, a frame is time-divided into a first field F11, a second field F12 and a third field F13. Each of the first, second and third fields F11, F12 and F13 is time-divided into a plurality of sub fields (SF1, ..., SFn) corresponding to the number of the light-generating units 152.

An initial light-generating time of an nth light-generating unit is delayed by a predetermined time gap in comparison with an initial light-generating time of an (n-1)th light-generating unit. For example, when a time period of each of the first, second and third fields F11, F12 and F13 is T1, the initial light-generating time of the nth light-generating unit is delayed by TI in comparison with the initial light-generating time of the (n-1)th light-generating unit. Each of the light-generating units 152 generates light for a predetermined time period.

A first light-generating unit B1 generates lights having a color different from each other for a predetermined time period corresponding to each of the first, second and third fields FI1, FI2 and F13. For example, the first light-generating unit B1 generates a red light RL in the first field FI1, a green light GL in the second field FI2 and a blue light BL in the third field F13. Alternatively, a light-generating order of the red, green and blue lights RL, GL and BL may be varied. The first light-generating unit B1 closes generating light corresponding to an end of a nth sub field. The nth sub field is a last sub field in each of the first, second and third fields F11, F12 and F13.

An initial light-generating time of a second light-generating unit B2 is delayed by a time period of one sub field in comparison with the initial light-generating time of the first light-generating unit B1. The second light-generating unit B2 generates light for a time period substantially same as the first light-generating unit B1.

The number of the light-generating units 152 may be varied. In this embodiment, the backlight unit 1 50 includes eight light-generating units 152. Referring to FIG. 4, when the backlight unit 150 includes eight light-generating units 152, each of the first, second and third fields FI1, FI2 and FI3 is time-divided into eight sub fields SF1, SF2, SF3, SF4, SF5, SF6, SF7 and SF8. The first light-generating unit B1 generates light in four sub fields, for example, the fifth, sixth, seventh and eighth sub fields SF5, SF6, SF7 and SF8 in each of the first, second and third fields F11, F12 and F13. Alternatively, the first light-generating unit B1 may generate light in three sub fields, for example, the sixth, seventh and eighth sub fields SF6, SF7 and SF8 in each of the first, second and third fields FI1, F12 and F13.

Thus, an initial light-generating time of each of a second light-generating unit B2, a third light-generating unit B3, a fourth light-generating unit B4, a fifth light-generating unit B5, a sixth light-generating unit B6, a seventh light-generating unit B7 and a eighth light-generating unit B8 is delayed by a time period of one sub field in comparison with an initial light-generating time of a prior light-generating unit, as the above.

The liquid crystal layer of the LCD panel 140 controls a transmittance of light in response to a data voltage applied to the LCD panel from the data lines DL. The liquid crystal layer may have a response speed base on the data voltage. Referring to FIG. 4, in view of the response speed of the liquid crystal layer, a time-transmittance TR of light passing through the LCD panel 140 slowly increases for a predetermined time period and is then saturated. Furthermore, since the gate lines GL are sequentially driven, the data voltages applied to the data line DL are delayed by a time block corresponding to each of the light-generating units 1 52.

Thus, when a time period, for which each of the light-generating units 152 generates the light, is synchronized with the time-transmittance TR of the light passing through the LCD panel 140, a light-using efficiency may be improved.

When the initial light-generating time of each of the light-generating units 152 are sequentially delayed, colors may be mixed with each other in each of the first, second and third fields FI1, FI2 and F13. For example, when a green needs to be displayed on a screen of the LCD panel 140, each of the light-generating units 152 is synchronized with the time-transmittance TR of the LCD panel 140 to generate the green light GL from the fifth sub field SF5 of the second field F12. However, each of the second, third, fourth, fifth, sixth, seventh and eighth light-generating units B2, B3, B4, B5, B6, B7 and B8 generates the red light RL in the second field F12. Thus, the red light RL affects the green light GL to deteriorate a purity of the green.

Furthermore, the first, second, third and fourth light-generating units B1, B2, B3 and B4 generates the blue light in the fifth, sixth, seventh and eighth sub fields SF5, SF6, SF7 and SF8 of the third field F13. Thus, the blue light affects the green light in the fifth, sixth and seventh sub fields SF5, SF6 and SF7 of the third field F13 to deteriorate the purity of the green.

In this embodiment, a peak light having a peak intensity is generated in a non-overlapped period, in which the lights having a color different from each other are not mixed with each other. Thus, a color mixing may be reduced.

Particularly, the first light-generating unit B1 generates the green light GL in the fifth, sixth, seventh and eighth sub fields SF5, SF6, SF7 and SF8 of the second field F12. The first light-generating unit B1 generates a peak light PL in the eighth sub field SF8. The peak light PL has an intensity greater than a light in the fifth, sixth and seventh sub fields SF5, SF6 and SF7, in which the red light RL is generated.

The second, third and fourth light-generating units B2, B3 and B4 generate the green light GL in the second and third fields FI2 and FI3.

The second light-generating unit B2 generates the green light GL in the sixth, seventh and eighth sub fields SF6, SF7 and SF8 of the second field FI2 and in the first sub field SF1 of the third field F13. The second light-generating unit B2 generates a peak light PL having a peak intensity in the eighth sub field SF8 of the second field F12 or in the first sub field SF1 of the third field F13, in which the red light RL and the blue light BL are not generated. For example, the second light-generating unit B2 may generate the peak light PL in the eighth sub field SF8 of the second field F12.

The third light-generating unit B3 generates the green light GL in the seventh and eighth sub fields SF7 and SF8 of the second field F12 and in the first and second sub fields SF1 and SF2 of the third field F13. The third light-generating unit B3 generates a peak light PL having a peak intensity in one of the eighth sub field SF8 of the second field F12, the first sub field SF1 of the third field FI3 and the second subfield SF2 of the third field F13, in which the red light RL and the blue light BL are not generated. For example, the third light-generating unit B3 may generate the peak light PL in the eighth sub field SF8 of the second field F12.

The fourth light-generating unit B4 generates the green light GL in the eighth sub fields SF8 of the second field F12 and in the first, second and third sub fields SF1, SF2 and SF3 of the third field F13. The fourth light-generating unit B4 generates a peak light PL having a peak intensity in one of the eighth sub fields SF8 of the second field F12 and the first, second and third sub fields SF1, SF2 and SF3 of the third field F13. For example, the fourth light-generating unit B4 may generate the peak light PL in the eighth sub field SF8 of the second field F12.

The fifth, sixth, seventh and eighth light-generating units B5, B6, B7 and B8 generate the green light GL in the third field F13 and a peak light PL in sub fields, in which the blue light BL is not generated. For example, the fifth, sixth, seventh and eighth light-generating units B5, B6, B7 and B8 generate the peak light PL in the sub field corresponding an initial light-generating time. Thus, the fifth light-generating units B5 generates the peak light PL in the first sub field SF1 of the third field F13, and the sixth light-generating units B6 generates the peak light PL in the second sub field SF2 of the third field F13, and the seventh light-generating units B7 generates the peak light PL in the third sub field SF3 of the third field F13, and the eighth light-generating units B8 generates the peak light PL in the fourth sub field SF4 of the third field F13.

Furthermore, the light-generating units 152 may further generate peak lights PL of the red light RL and the blue light BL. For example, the fifth, sixth, seventh and eighth light-generating units B5, B6, B7 and B8 may generate the peak light PL of the red light RL in the second field F12. The peak light PL of the red light RL generated by the fifth, sixth, seventh and eighth light-generating units B5, B6, B7 and B8 corresponds to subfields, in which the time-transmittance of the LCD panel 140 is relatively small. Thus, the green light GL is lightly affected by the red light RL.

When a frame is time-divided into a plurality of fields, a peak light having a peak intensity may be generated in the non-overlapped period, in which the lights having a color different from each other are not mixed with each other to reduce a color mixing.

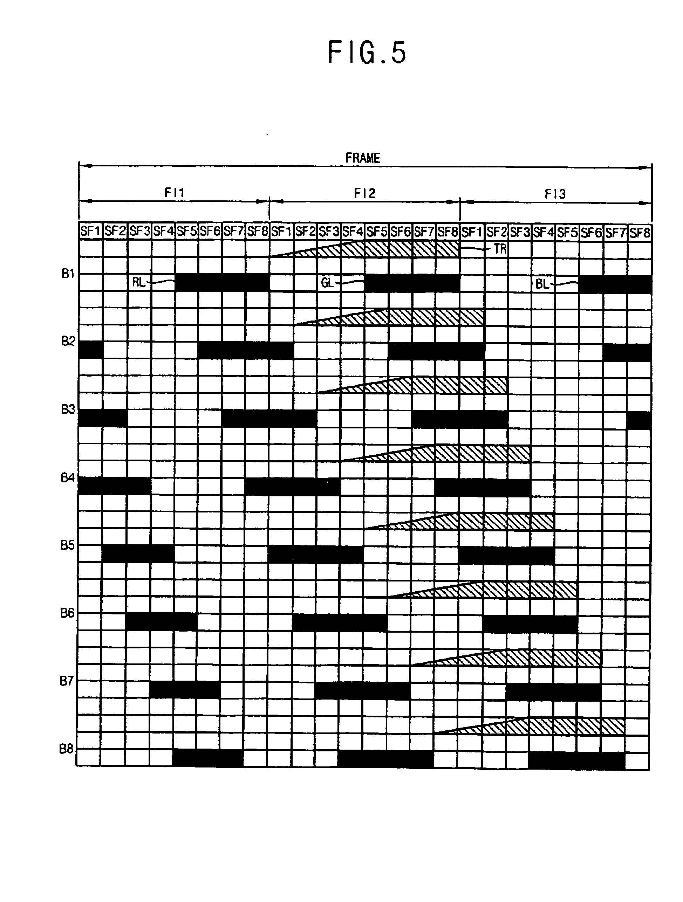

FIG. 5 is a timing diagram illustrating a method of driving the light-generating units according to another example.

Referring to FIGS. 1, 2 and 5, the first light-generating unit B1 generates a plurality of lights having a color different from each other in each of the first, second and third fields F11, F12 and F13. For example, the first light-generating unit B1 generates the red light RL in the first field F11, the green light GL in the second field F12 and the blue light BL in the third field F13. Alternatively, a light-generating order of the red, green and blue lights RL, GL and BL may be varied. The first light-generating unit B1 closes generating the light corresponding to an end of the eighth sub field SF8 in each of the first, second and third fields F11, F12 and F13. The eighth sub field SF8 corresponds to a last sub field in each of the first, second and third fields F11, F12 and F13.

An initial light-generating time of each of the second, third, fourth, fifth, sixth, seventh and eighth light-generating units B2, B3, B4, B5, B6, B7 and B8 is sequentially delayed by a time period of one sub field in comparison with a prior light-generating unit, and generates the light for a time period substantially same as the first light-generating unit B1.

In this embodiment, the light in one of the first, second and third fields F11, F12 and F13 is generated for a relatively short time period in comparison with remained fields. Thus, the color mixing may be reduced. Particularly, time periods, for which the red, green and blue light RL, GL and BL are generated, are different from each other to adjust the color mixing.

For example, when the backlight unit 150 includes eight light-generating units 152, the first light-generating unit B1 generates the lights for T1x(4/8) in one of the first, second and third fields FI1, FI2 and F13, which corresponds to a desired color, and for T1x(3/8) in at least one of remained fields.

Particularly, the first light-generating unit B1 generates the red light RL in the fifth, sixth, seventh and eighth sub fields SF5, SF6, SF7 and SF8 of the first field F11, and generates the green light GL in the fifth, sixth, seventh and eighth sub fields SF5, SF6, SF7 and SF8 of the second field F12, and generates the blue light BL in the sixth, seventh and eighth sub fields SF6, SF7 and SF8 of the third field F13. Thus, the first light-generating unit B1 generates the red and green lights RL and GL in four sub fields, and generates the blue light BL in three sub fields.

An initial light-generating time of each of the second, third, fourth, fifth, sixth, seventh and eighth light-generating units B2, B3, B4, B5, B6, B7 and B8 is sequentially delayed by a time period of one sub field in comparison with a prior light-generating unit, and generates the light for a time period substantially same as the first light-generating unit B1.

Referring to FIG. 5, when the green needs to be displayed on the screen of the LCD panel 140, the blue light BL affects the green light GL in the sixth and seventh sub fields SF6 and SF7 of the third field F13. However, the affection is relatively light in comparison with the case that the blue light BL generated in four sub fields of the third field F13 affects the green light GL in the fifth, sixth and seventh sub fields SF5, SF6 and SF7 of the third field F13.

Furthermore, the time periods, for which both of the red light RL and the blue light BL are generated, may be reduced so that the green light GL is lightly affected by the red light RL and the blue light BL. Thus, the color mixing may be reduced.

As the above, when the light-generating units 152 are controlled so that the time periods, for which the red, green and blue lights RL, GL and BL are generated, are different from each other, the color mixing may be desirably controlled. Thus, the color mixing perceived by an observer may be minimized.

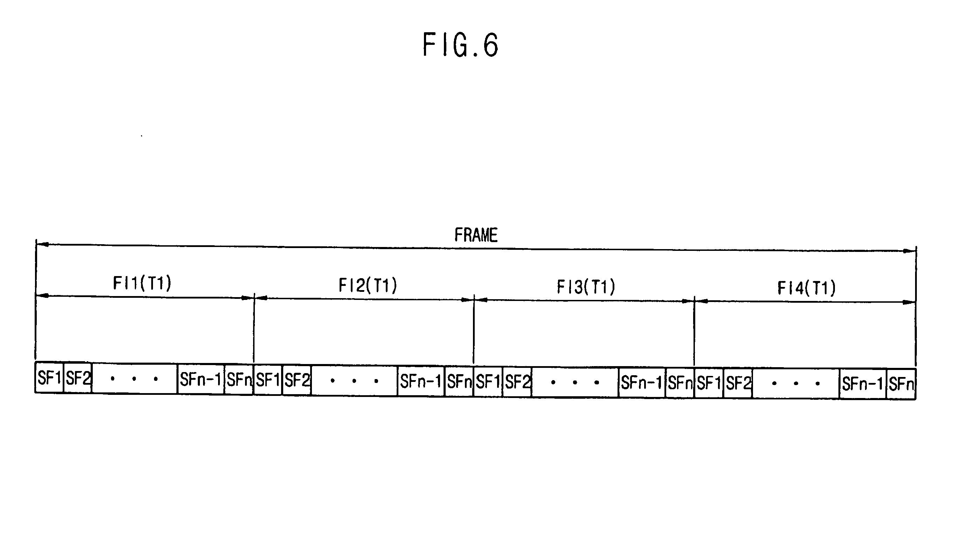

FIG. 6 is a schematic diagram explaining driver timing of an LCD apparatus according to another exemplary embodiment of the present invention.

Referring to FIGS. 1, 2 and 6, a frame of an LCD apparatus 100 is time-divided into a first field FI1, a second field F12, a third field FI3 and a fourth field F14. Each of the first, second, third and fourth field FI1, F12, FI3 and FI4 is time-divided into a plurality of sub fields SF1, ..., SFn corresponding to the number of light-generating units 152.

Each of the light-generating units 152 sequentially generates lights having a color different from each other corresponding to each of the first, second, third and fourth field FI1, FI2, FI3 and FI4. For example, the light-generate units 152 may generate a red light in the first field FI1, a green light in the second field F12, a blue light in the third field FI3 and a white light in the fourth field F14. Alternatively, a light-generating order of the red, green, blue and white lights may be varied.

Each of the light-generating units 152 may include a red LED 153a, a green LED 153b and a blue LED 153c in order to generate the red, green and blue lights. Each of the light-generating units 152 may simultaneously generate the red, green and blue lights to display the white light. Alternatively, each of the light-generating units 152 may further include a white LED.

Each of the light-generating units 152 are driven by substantially the same as the driving method illustrated in FIGS. 4 or 5 except that the frame is time-divided into four fields. Thus, any further explanation concerning the same elements will be omitted.

According to the above, a peak light having a peak intensity is generated in a non-overlapped period in which the different color lights are not mixed with each other and the color of the peak light is enhanced.

Furthermore, an LCD apparatus is controlled so that time periods for which the lights are of different color from each other are generated, are different.

Although the exemplary embodiments of the present invention have been described, it is understood that various changes and modifications can be made by one ordinary skilled in the art without, however, departing from the scope as defined by the claims of the present invention.

## Claims

1. A liquid crystal display (LCD) apparatus (100) adapted to time-divide a frame into a plurality of fields (Fl1,..., Fl4) in which lights having different colors from each other are generated, comprising:
a backlight unit (150) comprising n of light-generating units (152; B1, ..., B8) sequentially generating the lights in the fields (FI1,..., FI4), n being a natural number more than 1, an initial light-generating time of the nth light-generating unit (152) being delayed by a predetermined time interval compared to the initial light-generating time of the (n-1)th light-generating unit (152), each of the fields (FI1,..., F14) comprising a first period for generating one of the lights and a second period for generating at least two of the lights, the light-generating units (152; B1, ..., B8) each generating a peak light (PL) having a peak intensity in the first period;
**characterized by**
the light-generating units (152; B1, ..., B8) -generating the lights for a time period substantially the same as each other, wherein the predetermined time interval is T1/n, T1 being the time period of each of the fields (Fl1,..., Fl4);
each of the fields (FI1,..., FI4) being divided into n sub fields (SF1, ..., SFn) corresponding to the number of the light-generating units (152; B1, ..., B8), and the first light-generating unit (B1) stops generating the light at the end of the nth sub field (SFn);-the number of the light-generating units (152; B1, ..., B8) being 8, and the first light-generating unit (B1) generating the light in a fifth subfield (SF5), a sixth sub field (SF6), a seventh sub field (SF7) and an eighth sub field (SF8) of each of the fields (FI1,..., FI4);
the first light-generating unit (B1) generating the peak light (PL) in the eighth sub field (SF8),
a second light-generating unit (B2), a third light-generating unit (B3) and a fourth light-generating unit (B4) generating the peak light (PL) in the eighth sub field (SF8), and
a fifth light-generating unit (B5), a sixth light-generating unit (B6), a seventh light-generating unit (B7) and an eighth light-generating unit (B8) generating the peak light (PL) in a sub field (SF1, ..., SFn) corresponding to the initial light-generating time of the respective light-generating unit.

2. The LCD apparatus (100) of claim 1, wherein the backlight unit (150) further comprises a light-generating controller to control the light-generating units (152; B1, ..., B8).

3. The LCD apparatus (100) of claim 1, each of the light-generating units (152; B1, ..., B8) comprising a red light-emitting diode (LED) (153a), a green LED (153b) and a blue LED (153c).

4. The LCD apparatus (100) of claim 3, each of the light-generating units (152; B1, ..., B8) sequentially generating a red light, a green light and a blue light respectively corresponding to each of the fields (FI1,..., FI3) in the frame.

5. The LCD apparatus (100) of claim 3, each of the light-generating units (152; B1, ..., B8) sequentially generating a red light, a green light, a blue light and a white light respectively corresponding to each of the fields (FI1,..., FI4) in the frame.

6. A driving method of a liquid crystal display (LCD) apparatus (100) to time-divide a frame into a plurality of fields (FI1...., F14) in which lights having different colors from each other are generated, the method comprising:
sequentially generating the lights, the lights being generated by n light-generating units (152; B1, ..., B8) arranged an arranging direction of in a plurality of gate lines (GL) of a liquid crystal display panel, n being a natural number more than 1, an initial light-generating time of an nth light-generating unit (152) being delayed by T1/n, T1 being the time period of each of the fields (FI1,..., FI4), compared to the initial light-generating time of an (n-1)th light-generating unit (152) so that each of the fields (FI1,..., F14) comprises a first period, in which one of the lights is generated and a second period in which at least two of the lights are generated, the time period for which each of the lights is generated being substantially the same, the peak light (PL) intensity being generated in the first period;
**characterized in that**
each of the fields (FI1,..., F14) is divided into n of sub fields (SF1, ..., SFn) corresponding to the number of the tight-generating units (162; B1, ..., B8), and a first light-generating unit (B1) stops generating the light at the end of the nth sub field (SFn);
wherein the number of the light-generating units (152; B1, ..., B8) is 8, and the first light-generating unit (B1) generates the light in a fifth subfield (SF5), a sixth sub field (SF6), a seventh sub field (SF7) and an eighth sub field (SF8) of each of the fields (FI1,..., F14), and the first light-generating unit (B1), a second light-generating unit (B2), a third light-generating unit (B3) and a fourth light-generating unit (B4) generates the peak light (PL) in the eighth sub field (SF8), and a fifth light-generating unit (B5), a sixth light-generating unit (B6), a seventh light-generating unit (B7) and an eighth light-generating unit (B8) generates the peak light (PL) in a sub field corresponding to the initial light-generating time of the respective light-generating unit.

## Patentansprüche

1. Flüssigkristallanzeige (LCD)-Vorrichtung (100), die dazu eingerichtet ist, einen Rahmen zeitlich in eine Vielzahl von Feldern (FI1,..., FI4) zu unterteilen, in denen Lichter mit voneinander unterschiedlichen Farben erzeugt werden, umfassend:
eine Rückbeleuchtungseinheit (150) mit n Lichterzeugungseinheiten (152; B1,..., B8), die nacheinander die Lichter in den Feldern (FI1,..., FI4) erzeugen, wobei n eine natürliche Zahl größer 1 ist, wobei eine anfängliche Lichterzeugungszeit der n-ten Lichterzeugungseinheit (152) um ein vorbestimmtes Zeitintervall im Vergleich zur anfänglichen Lichterzeugungszeit der (n-1)-ten Lichterzeugungseinheit (152) verzögert ist, wobei jedes der Felder (FI1,..., FI4) eine erste Periode zum Erzeugen eines der Lichter und eine zweite Periode zum Erzeugen von mindestens zwei der Lichter umfasst, wobei die Lichterzeugungseinheiten (152; B1,..., B8) jeweils ein Peak-Licht (PL) mit einer Spitzenintensität in der ersten Periode erzeugen,
**dadurch gekennzeichnet, dass**
die Lichterzeugungseinheiten (152; B1,..., B8) die Lichter über einen Zeitraum erzeugen, der im Wesentlichen jeweils gleich ist, wobei das vorbestimmte Zeitintervall T1/n ist, wobei T1 die Zeitdauer jedes der Felder (FI1,..., FI4) ist;
jedes der Felder (FI1,..., FI4) in n Teilfelder (SF1, ..., SFn) entsprechend der Anzahl der Lichterzeugungseinheiten (152; B1, ..., B8) unterteilt ist,
und die erste Lichterzeugungseinheit (B1) am Ende des n-ten Teilfeldes (SFn) aufhört, das Licht zu erzeugen;
die Anzahl der Lichterzeugungseinheiten (152; B1,..., B8) 8 ist, und die erste Lichterzeugungseinheit (B1) das Licht in einem fünften Teilfeld (SF5), einem sechsten Teilfeld (SF6), einem siebenten Teilfeld (SF7) und einem achten Teilfeld (SF8) jedes der Felder (FI1,..., FI4) erzeugt;
die erste Lichterzeugungseinheit (B1) das Peak-Licht (PL) im achten Teilfeld (SF8) erzeugt;
eine zweite Lichterzeugungseinheit (B2), eine dritte Lichterzeugungseinheit (B3) und eine vierte Lichterzeugungseinheit (B4) das Peak-Licht (PL) im achten Teilfeld (SF8) erzeugen, und
eine fünfte Lichterzeugungseinheit (B5), eine sechste Lichterzeugungseinheit (B6), eine siebente Lichterzeugungseinheit (B7) und eine achte Lichterzeugungseinheit (B8) das Peak-Licht (PL) in einem Teilfeld (SF1,..., SFn) erzeugen, das der anfänglichen Lichterzeugungszeit der jeweiligen Lichterzeugungseinheit entspricht.

2. LCD-Vorrichtung (100) nach Anspruch 1, wobei die Rückbeleuchtungseinheit (150) ferner einen Lichterzeugungs-Controller zum Steuern der Lichterzeugungseinheiten (152; B1,..., B8) umfasst.

3. LCD-Vorrichtung (100) nach Anspruch 1, wobei jede der Lichterzeugungseinheiten (152; B1,..., B8) eine rote Leuchtdiode (LED) (153a), eine grüne LED (153b) und eine blaue LED (153c) umfasst.

4. LCD-Vorrichtung (100) nach Anspruch 3, wobei jede der Lichterzeugungseinheiten (152; B1,..., B8) nacheinander ein rotes Licht, ein grünes Licht und ein blaues Licht erzeugt, die jeweils den Feldern (FI1,..., FI3) in dem Rahmen entsprechen.

5. LCD-Vorrichtung (100) nach Anspruch 3, wobei jede der Lichterzeugungseinheiten (152; B1,..., B8) nacheinander ein rotes Licht, ein grünes Licht, ein blaues Licht und ein weißes Licht erzeugt, die jeweils jedem der Felder (FI1,..., FI4) in dem Rahmen entsprechen.

6. Ansteuerverfahren für eine Flüssigkristallanzeige (LCD)-Vorrichtung (100) zum zeitlichen Unterteilen eines Rahmens in eine Vielzahl von Feldern (FI1,..., FI4), in denen Lichter mit voneinander unterschiedlichen Farben erzeugt werden, wobei das Verfahren umfasst:
das aufeinanderfolgende Erzeugen der Lichter, wobei die Lichter von n Lichterzeugungseinheiten (152; B1,..., B8) erzeugt werden, die in einer Anordnungsrichtung einer Vielzahl von Gatterlinien (GL) einer Flüssigkristallanzeigetafel angeordnet sind, wobei n eine natürliche Zahl größer 1 ist, wobei eine anfängliche Lichterzeugungszeit einer n-ten Lichterzeugungseinheit (152) im Vergleich zur anfänglichen Lichterzeugungszeit einer (n-1)ten Lichterzeugungseinheit (152) um T1/n verzögert ist, wobei T1 die Zeitdauer jedes der Felder (FI1,..., FI4) ist, so dass jedes der Felder (FI1,..., FI4) eine erste Periode, in der eines der Lichter erzeugt wird, und eine zweite Periode, in der mindestens zwei der Lichter erzeugt werden, wobei die Zeitdauer, über die jedes der Lichter erzeugt wird, im Wesentlichen gleich ist, wobei die Peak-Licht (PL)-Intensität in der ersten Periode erzeugt wird,
**dadurch gekennzeichnet, dass**
jedes der Felder (FI1,..., FI4) in n Teilfelder (SF1,..., SFn) unterteilt ist, die der Anzahl der Lichterzeugungseinheiten (152; B1,..., B8) entsprechen,
und eine erste Lichterzeugungseinheit (B1) am Ende des n-ten Teilfeldes (SFn) aufhört, das Licht zu erzeugen,
wobei die Anzahl der Lichterzeugungseinheiten (152; B1,..., B8) 8 ist, und
die erste Lichterzeugungseinheit (B1) das Licht in einem fünften Teilfeld (SF5), einem sechsten Teilfeld (SF6), einem siebenten Teilfeld (SF7) und
einem achten Teilfeld (SF8) jedes der Felder (FI1,..., FI4) erzeugt, und die erste Lichterzeugungseinheit (B1), eine zweite Lichterzeugungseinheit (B2), eine dritte Lichterzeugungseinheit (B3) und eine vierte Lichterzeugungseinheit (B4) das Peak-Licht (PL) im achten Teilfeld (SF8) erzeugen, und eine fünfte Lichterzeugungseinheit (B5), eine sechste Lichterzeugungseinheit (B6), eine siebente Lichterzeugungseinheit (B7) und eine achte Lichterzeugungseinheit (B8) das Peak-Licht (PL) in einem Teilfeld erzeugen, das der anfänglichen Lichterzeugungszeit der jeweiligen Lichterzeugungseinheit entspricht.

## Revendications

1. Un appareil à écran à cristaux liquides (LCD) (100) adapté pour diviser en temps un cadre en une pluralité de champs (FI1,.... FI4) dans lesquels des lumières cubiques ayant différentes couleurs l'une de l'autre, sont générées, comprenant :
Une unité de rétroéclairage (150) comprenant n des unités générant de la lumière (152 ; B1, ..., B8) générant de façon séquentielle les lumières dans les champs (FI1, ... FI4), n étant un nombre naturel supérieur à 1, un temps générant de la lumière initial de la n^{ième} unité générant de la lumière (152) étant retardé par un intervalle de temps prédéterminé comparé au temps initial générant de la lumière de la (n-1)^{ième} unité générant de la lumière (152), chacun des champs (FI1,... FI4) comprenant une première période pour générer une des lumières et une deuxième période pour générer au moins deux des lumières, les unités générant de la lumière (152 ; B1, ... B8), chacune générant une lumière de pointe (PL) ayant une intensité de point pendant la première période ;
**Caractérisé par**
Les unités générant de la lumière (152 ; B1, ..., B8) générant les lumières pendant une période de temps substantiellement identique l'une à l'autre,
où l'intervalle de temps prédéterminé est T1/n, T1 étant la période de temps de chacun des champs (FI1, ... FI4) ;
Chacun des champs (FI1, ... FI4) étant divisé en n sous-champs (SF1, ..
SFn) correspondant au nombre d'unités générant de la lumière (152 ; B1, ...
B8) et la première unité générant de la lumière (B1) cesse de générer de la lumière à la fin du n^{ième} sous-champ (SFn) ;
Le nombre d'unités générant de la lumière (152 ; B1, ... B8) étant 8, et la première unité générant de la lumière (B1) générant la lumière dans un cinquième sous-champ (SF5), un sixième sous-champ (SF6), un septième sous-champ (SF7) et un huitième sous-champ (SF8) de chacun des champs (FI1, ... FI4) ;
La première unité générant de la lumière (B1) générant la lumière de pointe (PL) dans le huitième sous-champ (SF8),
Une deuxième unité générant de la lumière (B2), une troisième unité générant de la lumière (B3) et une quatrième unité générant de la lumière (B4) générant la lumière de pointe (PL) dans le huitième sous-champ (SF8),
et
Une cinquième unité générant de la lumière (B5), une sixième unité générant de la lumière (B6), une septième unité générant de la lumière (B7) et une huitième unité générant de la lumière (B8) générant la lumière de pointe (PL) dans un sous-champ (SF1, ... SFn) correspondant au temps initial générant de la lumière de l'unité générant de la lumière respective.

2. L'appareil LCD (100) de la revendication 1, où l'unité de rétroéclairage (150) comprend de plus un contrôleur générant de la lumière pour contrôler les unités générant de la lumière (152 ; B1, ... B8).

3. L'appareil LCD (100) de la revendication 1, chacune des unités générant de la lumière (152 ; B1, ... B8) comprenant une diode émettant de la lumière rouge (DEL) (153a), une DEL verte (153b) et une DEL bleue (153c).

4. L'appareil LCD (100) de la revendication 3, chacune des unités générant de la lumière (152 ; B1, ... B8) générant de façon séquentielle une lumière rouge, une lumière verte et une lumière bleue respectivement, correspondant à chacun des champs (FI1, ... FI3) dans le cadre.

5. L'appareil LCD (100) de la revendication 3, chacune des unités générant de la lumière (152 ; B1, ... B8) générant de façon séquentielle une lumière rouge, une lumière verte, une lumière bleue et une lumière blanche respectivement, correspondant à chacun des champs (FI1, ... FI4) dans le cadre.

6. Une méthode de conduite d'un appareil à écran à cristaux liquides (LCD) (100) pour diviser en temps un cadre en une pluralité de champs (FI1, ... FI4) dans lesquels des lumières ayant différentes couleurs l'une de l'autre sont générées, la méthode comprenant :
La génération séquentielle des lumières, les lumières étant générées par n unités générant la lumière (152 ; B1, ... B8) disposées dans un sens de disposition d'une pluralité de lignes de barrière (GL) d'un panneau d'affichage à cristaux liquides, n étant un nombre naturel supérieur à 1, un temps de génération de lumière initial d'une n^{ième} unité générant de la lumière (152) étant retardé de T1/n, T1 étant la période de temps de chacun des champs (FI7., ... FI4), comparée au temps de génération de la lumière initial d'une (n-1)^{ième} unité générant de la lumière (152) pour que chacun des champs (FI1, ... FI4) comprenne une première période, pendant laquelle une des lumières est générée et une deuxième période pendant laquelle au moins deux des lumières sont générées, la période de temps pendant laquelle chacune des lumières est générée étant substantiellement la même, l'intensité de la lumière de pointe (PL) étant générée pendant la première période
**Caractérisée en ce que**
Chacun des champs (FI1, ... FI4) est divisé en n sous-champs (sF1, ... SFn) correspondant au nombre d'unités générant de la lumière (152 ; B1, ... B8),
et une première unité générant de la lumière (B1) cesse de générer la lumière à la fin du n^{ième} sous-champ (SFn) ;
Où le nombre d'unités générant de la lumière (152 ; B1, ... B8) est 8, et la première unité générant de la lumière (B1) génère de la lumière dans un cinquième sous-champ (SF5), un sixième sous-champ (SF6), un septième sous-champ (SF7) et un huitième sous-champ (SF8) de chacun des champs (FI1, ... FI4), et la première unité générant de la lumière (B1), une deuxième unité générant de la lumière (B2), une troisième unité générant de la lumière (B3) et une quatrième unité générant de la lumière (B4) génèrent la lumière de pointe (PL) dans le huitième sous-champ (SF8), et une cinquième unité générant de la lumière (B5), une sixième unité générant de la lumière (B6), une septième unité générant de la lumière (B7) et une huitième unité générant de la lumière (B8) génèrent la lumière de pointe (PL) dans un sous-champ correspondant au temps initial de génération de lumière de l'unité générant de la lumière respective.
